# EUROPÄISCHE PATENTSCHRIFT

(11) **EP 0 696 952 B1**
(45) Veröffentlichungstag und Bekanntmachung des Hinweises auf die Patenterteilung: **06.05.1998**
(21) Anmeldenummer: 95911191.5
(22) Anmeldetag: 21.02.1995
(51) Int. Cl.: B29C 45/14

(54) **VORRICHTUNG UND VERFAHREN ZUM UMSPRITZEN EINES ROHRES ODER ROHRFÖRMIGEN VERBUNDKÖRPERS MIT GUMMI ODER KUNSTSTOFF**
DEVICE AND METHOD FOR EXTRUSION-COATING TUBES OR COMPOUND TUBULAR CONNECTION FITTINGS WITH RUBBER OR PLASTIC
PROCEDE ET DISPOSITIF PERMETTANT DE RECOUVRIR PAR EXTRUSION UN TUYAU OU UN CORPS COMPOSITE TUBULAIRE, A L'AIDE DE CAOUTCHOUC OU DE PLASTIQUE

(30) Priorität: 23.02.1994 DE 4405787
(43) Veröffentlichungstag der Anmeldung: 21.02.1996
(73) Patentinhaber: PHOENIX AKTIENGESELLSCHAFT, 21079 Hamburg (DE)
(72) Erfinder: ZIMMER, Detlef, D-33415 Verl (DE); AHLERS, Michael, D-22089 Hamburg (DE); STUHRMANN, Dirk, D-20535 Hamburg (DE)
(86) Internationale Anmeldenummer: DE9500217
(87) Internationale Veröffentlichungsnummer: WO9523058

(56) Entgegenhaltungen:
- DE-A- 1 729 336
- DE-C- 4 123 256
- PATENT ABSTRACTS OF JAPAN vol. 17 no. 433 (M-1461) ,11.August 1993 & JP,A,05 096629 (TOYODA GOSEI CO LTD) 20.April 1993, & US,A,5 356 587 (MITSUI) 18.Oktober 1994

## Beschreibung

Die Erfindung betrifft eine Vorrichtung zum Umspritzen eines Rohres oder des abzudichtenden Verbindungsbereiches eines rohrförmigen Verbundkörpers mit Gummi oder Kunststoff (Thermoplast, thermoplastischeses Elastomer), insbesondere zum Umspritzen einer Schlauchverbindung, umfassend einen Stutzen aus Metall oder Kunststoff (z.B. Polyamid), auf den der/die Schlauchabschnitt/e aus Gummi oder Kunststoff aufgeschoben wird/werden.

Bezüglich Schlauchverbindungen (z.B. Formschlauchverzweigungen) unter Verwendung eines Stutzens (z.B. T-förmiges Rohrstück), die hier als schwerpunkmäßiger Anwendungsbereich genannt sein sollen, gibt es Zwischenzeitlich einen umfangreichen Stand der Technik, wobei beispielsweise auf folgende Druckschriften verwiesen wird:
DE-A-32 39 623, DE-A-33 36 940, DE-A-37 13 064, DE-A-37 29 056, DE-A-38 29 665, DE-C-40 25 141, DE-A-41 02 700, EP-A-0 243 216, EP-A-0 564 990.

Bei herkömmlicher Formtrennung zur Herstellung obiger Schlauchverbindungen wird der Schlauch im Bereich des Stutzens mit einer Vorspannung auf den Stutzen gepreßt, damit der Schlauch beim Spritzgießen nicht durch den Spritzdruck verschoben wird und gleichzeitig eine Verdichtung der Umspritzung erfüllt werden kann. Dies wird normalerweise dadurch erreicht, daß hier über Verkleinerung des umfangenden Werkzeugdurchmessers gearbeitet wird, d.h. je kleiner der Durchmesser, desto größer die Flächenpressung. Daraus ergibt sich eine größtmögliche Verdichtung und Fixierung während des Einspritz- und Nachdruckvorganges. wird jedoch die Vorspannung soweit gebracht, daß diese Abdichtung erfolgreich ist, kann dieses unter Umständen zu Beschädigungen des Schlauches im Klemmbereich der Formtrennung führen. Gleichzeitig führen Wandstärkenunterschiede des Schlauches zu mehr Beschädigung, wenn die Wandstärke dicker ausfällt. Bei Abnahme der Wandstärke ist eine erforderliche Verdichtung der Umspritzung nicht gewährleistet und führt zu Lageveränderung des Schlauches und zu überspritzungen, welche die Teile unbrauchbar machen.

Um diesen Nachteilen entgegenzuwirken, wird erfindungsgemäß eine Vorrichtung vorgeschlagen, die neben der festen Formwerkzeugkontur mit Einspritzdüsen wenigstens einen, insbesondere wenigstens zwei Klemmschieber besitzt, wobei die Schieberdichtfläche im wesentlichen die Kontur der unmittelbar gegenüberstehenden Artikeloberfläche im Abdichtungsbereich aufweist.

Besonders vorteilhaft ist es, wenn zwei bis sechs Klemmschieber vorhanden sind, wobei sie die in den Ansprüchen 1 und 2 festgehaltenen Zahlenangaben auf eine Umfangseinheit des zum umspritzenden Rohres oder des abzudichtenden Verbindungsbereiches eines rohrförmigen Verbundkörpers bezieht. Beispiel: Werden auf ein T-förmiges Rohrstück drei Schlauchabschnitte geschoben, so gibt es drei Dichtbereiche und somit hinsichtlich der Klemmschieber auch drei Umfangseinheiten. Bei beispielsweise vier Schiebern je Umfangseinheit hat die gesamte Vorrichtung also (3 x 4 = 12) Schieber.

Zweckmäßigerweise werden als Klemmschieber hydraulisch gesteuerte Schieber verwendet. Diese gewährleisten eine relativ gleichmäßige Flächenpressung, wenn der Verfahrhub dieser Schieber den Vorspanndurchmesser der Dichtungskontur wesentlich unterschreiten kann. Das heißt, die Schieber fahren mit einem vorgewählten Hydraulikdruck auf die Dichtungsfläche auf und kommen erst bei Erreichen einer gewünschten Flächenpressung (Gegendruck) zum Stehen.

Je nach Wandstärke der Schläuche über- oder unterlaufen die Schieber die Durchmesser im Abdichtungsbereich. Es stellt sich somit eine "Hydro-Gummi-Elastische" Vorspannung ein, die außerdem durch den vorgewählten Steuerdruck weitere Variationen der Flächenpressung ermöglicht. Gleichzeitig wird durch diese "Hydro-Gummi-Elastische" Vorspannung eine Beschädigung im Klemmbereich der Schläuche und der häufig vorhandenen Gewebeeinlagen vermieden, und zwar bei größstmöglicher Reproduzierbarkeit der Einspritz- und Nachdruckparameter während des Umspritzvorganges. Außerdem bleibt die vormontierte Lage des Schlauches gewährleistet.

Weitere zweckmäßige Ausgestaltungsformen der erfindungsgemäßen Vorrichtung werden in Verbindung mit der Figurenbeschreibung vorgestellt.

Eine weitere Aufgabe der Erfindung besteht darin, ein Verfahren zum Umspritzen eines Rohres oder des abzudichtenden Verbindungsbereiches eines rohrförmigen Verbundkörpers mit Gummi oder Kunststoff unter Verwendung der erfindungsgemäßen Vorrichtung bereitzustellen, wobei folgende Verfahrensschritte ablaufen:
- das Formwerkzeug wird geöffnet, wobei sämtliche Klemmschieber ausgefahren sind;
- das zu umspritzende Teil (z.B. T-förmige Schlauchverzweigung) wird eingelegt;
- das Formwerkzeug wird geschlossen;
- sämtliche Klemmschieber fahren in die Abdichtposition, wobei ein Druck aufgebaut wird;
- Gummi oder Kunststoff wird über Düsen in das Formwerkzeug eingespritzt, wobei der Schieberdruck dem Spritzdruck entgegenwirkt;
- nach Beendigung der Nachdruckphase fahren sämtliche Klemmschieber aus dem Formwerkzeug;
- anschließend wird das Formwerkzeug geöffnet und der Formartikel (z.B. umspritzte Formschlauchverzweigung) entnommen.

Die Erfindung wird nun anhand von Ausführungsbeispielen unter Bezugnahme auf schematische Zeichnungen erläutert.
Es zeigen:
- Fig. 1: eine Vorrichtung mit eingelegter Schlauchverbindung und eingefahrenem Schieber
(Längsschnittsdarstellung);
- Fig. 2: eine Vorrichtung mit eingelegter Schlauchverbindung mit verschiedenen Schieberpositionen
(Querschnittsdarstellung);
- Fig. 3: eine Vorrichtung mit eingelegtem Rohr und eingefahrenem Schieber, der mit einem elastischen Dichtpuffer versehen ist
(Längsschnittsdarstellung).

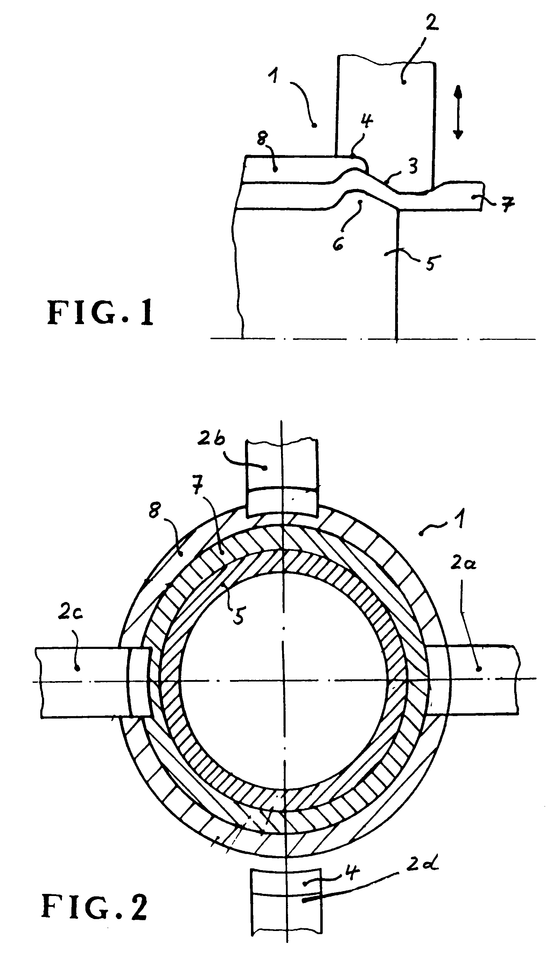

Fig. 1 zeigt eine Vorrichtung (Formwerkzeug) im geschlossenen Zustand. Dabei besteht die gesamte Vorrichtung aus der festen Formwerkzeugkontur (1), die eine oder mehrere Einspritzdüsen besitzt. Der in Pfeilrichtung bewegliche Klemmschieber (2), der eingefahren ist, weist eine Schieberdichtfläche (3) auf, die im wesentlichen der Kontur der unmittelbar gegenüberstehenden Artikeloberfläche im Abdichtungsbereich entspricht, wobei die Schieberdichtfläche mit einer zusätzlichen Aussparung (4) versehen ist, in die der Spritzgußwerkstoff (Gummi oder Kunststoff) einfließt.

Die fertige Schlauchverbindung als Formartikel besteht aus einem Rohrstutzen (5) aus Metall oder Kunststoff, der eine flanschförmige Erweiterung (6) besitzt, sowie aus dem Schlauchabschnitt (7) und der Umspritzung (8).

Fig. 2 zeigt im Querschnitt gesehen die gleiche Schlauchverbindung, wie sie in Fig. 1 dargestellt ist, wobei verschiedene Positionen des Schiebers (2) dargestellt werden, und zwar im geschlossenen Zustand. Es bedeuten:
(2a) Schieber eingefahren (Position "Null", bezogen auf die Schlauchoberfläche);
(2b) Schieber eingefahren und unterlaufen;
(2c) Schieber eingefahren und überlaufen;
(2d) Schieber ausgefahren.

Zweckmäßig ist dabei die Schieberposition (2a). Auch die Position (2c) ist vertretbar, während die Position (2b) unerwünscht ist.

Auch wenn der schwerpunktpmäßige Anwendungsbereich der erfindungsgemäßen Vorrichtung und des Verfahrens auf dem Umspritzen von Schlauchverbindungen beruht, so können auf diese Weise auch andere Artikel hergestellt werden. Beispiel: Man kann einen rohrförmigen Körper, dessen Oberfläche nicht verletzt werden darf, mit einem Stoß- oder Scheuerschutz bzw. Verbindungselementen etc. versehen.

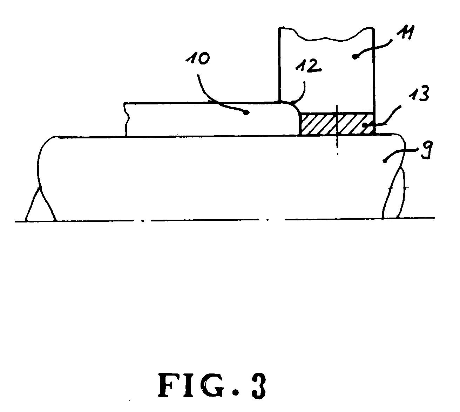

Fig. 3 zeigt nun einen derartigen Anwendungsfall. Ein Rohr (9) erfährt eine Umspritzung (10). Der Schieber (11) weist auch hier vorzugsweise eine Aussparung (12) auf, in die der Spritzgußwerkstoff einfließt. Die Schieberdichtfläche selbst ist zweckmäßigerweise mit einem elastischen Dichtpuffer (13) versehen, beispielsweise aus Gummi oder gummiähnlichem Werkstoff, womit in Verbindung mit Hydraulikschiebern ebenfalls eine "Hydro-Gummi-Elastische"-Vorspannung gewährleistet ist.

## Patentansprüche

1. Vorrichtung zum Umspritzen eines Rohres (9) oder des abzudichtenden Verbindungsbereiches eines rohrförmigen Verbundkörpers mit Gummi oder Kunststoff, insbesondere zum Umspritzen einer Schlauchverbindung, umfassend einen Stutzen (5) aus Metall oder Kunststoff, auf dem der/die Schlauchabschnitt/e (7) aus Gummi oder Kunststoff aufgeschoben wird/werden, dadurch gekennzeichnet, daß die Vorrichtung neben der festen Formwerkzeugkontur (1) mit Einspritzdüsen wenigstens einen, insbesondere wenigstens zwei Klemmschieber (2, 11) je Umfangseinheit besitzt, wobei die Schieberdichtfläche (3) im wesentlichen die Kontur der unmittelbar gegenüberstehenden Artikeloberfläche im Abdichtungsbereich aufweist.

2. Vorrichtung nach Anspruch 1, dadurch gekennzeichnet, daß zwei bis sechs Klemmschieber (2) je Umfangseinheit vorhanden sind.

3. Vorrichtung nach Anspruch 1 oder 2, dadurch gekennzeichnet, daß der Klemmschieber (2, 11) ein hydraulisch gesteuerter Schieber ist.

4. Vorrichtung nach einem der Ansprüche 1 bis 3, dadurch gekennzeichnet, daß der Klemmschieber (2, 11) im Bereich seiner Dichtfläche (3) eine Aussparung (4, 12) besitzt, die beim Umspritzen ausgefüllt wird.

5. Vorrichtung nach einem der Ansprüche 1 bis 4, dadurch gekennzeichnet, daß die Dichtfläche des Klemmschiebers (12) mit einem elastischen Dichtpuffer (13) versehen ist.

6. Verfahren zum Umspritzen eines Rohres oder des abzudichtenden Verbindungsbereiches eines rohrförmigen Verbundkörpers mit Gummi oder Kunststoff, insbesondere zum Umspritzen einer Schlauchverbindung, unter Verwendung einer Vorrichtung nach einem der Ansprüche 1 bis 5, gekennzeichnet durch folgende Verfahrensschritte:
- das Formwerkzeug wird geöffnet, wobei sämtliche Klemmschieber ausgefahren sind;
- das zu umspritzende Teil wird eingelegt;
- das Formwerkzeug wird geschlossen;
- sämtliche Klemmschieber fahren in die Abdichtposition, wobei ein Druck aufgebaut wird;
- Gummi oder Kunststoff wird über Düsen in das Formwerkzeug eingespritzt, wobei der Schieberdruck dem Spritzdruck entgegenwirkt;
- nach Beendigung der Nachdruckphase fahren sämtliche Klemmschieber aus dem Formwerkzeug;
- anschließend wird das Formwerkzeug geöffnet und der Formartikel entnommen.

## Claims

1. A device for extrusion-coating with rubber or plastics
a pipe (9) of the region of the sealing connection of a composite tubular body, in particular for extrusion-coating a hose connection comprising a stub (5) of metal or plastics onto which the portion or portions (7) of hose is/are pushed, characterized in that
next the fixed moulding-tool contour (1) with injector nozzles the device has at least one, in particular at least two clamping-sliders (2, 11) per circumferential unit, the sealing area (3) of the slider exhibiting in the sealing region essentially the contour of the surface of the article directly opposite.

2. A device as in Claim 1, characterized in that
there are two to six clamping-sliders (2) per circumferential unit.

3. A device as in Claim 1 or 2, characterized in that
the clamping-slider (2, 11) is a hydraulically controlled slider.

4. A device as in one of the Claims 1 to 3, characterized
in that the clamping-slider (2, 11) in the region of its sealing area (3) has a recess (4, 12) which becomes filled during injection.

5. A device as in one of the Claims 1 to 4, characterized
in that the sealing area of the clamping-slider (12) is provided with an elastic sealing-buffer (13).

6. A method of extrusion-coating with rubber or plastics
a pipe (9) or the legion of the sealing connection of a composite tubular body, in particular for extrusion-coating a hose connection, by the employment of a device as in one of the Claims 1 to 5, characterized by the following steps of the method:
- the mould tool is opened and all the clamping-sliders are run out;
- the part to be extrusion-coated is inserted;
- the mould tool is closed;
- all the clamping-sliders are run into the sealing position and a pressure is built up;
- rubber or plastics is injected via nozzles into the mould tool, with the slider pressure opposing the injection pressure;
- after termination of the dwell pressure phase all the clamping sliders run out of the mould tool;
- then the mould tool is opened and the moulded article is removed.

## Revendications

1. Dispositif pour recouvrir de caoutchouc ou de matière plastique, par moulage par injection, un tuyau (9) ou la zone de raccordement à étanchéifier d'un corps composite tubulaire, en particulier pour recouvrir par moulage par injection une jonction de tuyaux souples, comprenant un embout (5) en métal ou en matière plastique, sur lequel le ou les tronçon(s) de tuyau souple (7) en caoutchouc ou en matière plastique est/sont enfilé(s), caractérisé en ce que le dispositif comporte, à côté du contour fixe (1) de l'outil de moulage muni de buses d'injection, au moins un, en particulier au moins deux organes coulissants de serrage (2, 11) par circonférence unitaire, la surface d'étanchéité (3) des organes coulissants présentant alors sensiblement le même profil que la surface extérieure de l'article située directement en regard, dans la zone d'étanchéification.

2. Dispositif selon la revendication 1, caractérisé en ce que deux à six organes coulissants de serrage (2) par circonférence unitaire sont présents.

3. Dispositif selon la revendication 1 ou 2, caractérisé en ce que l'organe coulissant de serrage (2, 11) est un organe coulissant à commande hydraulique.

4. Dispositif selon l'une des revendications 1 à 3, caractérisé en ce que l'organe coulissant de serrage (2, 11) comporte, dans la région de sa surface d'étanchéité (3), un évidement (4, 12) qui est rempli lors du recouvrement par moulage par injection.

5. Dispositif selon l'une des revendications 1 à 4, caractérisé en ce que la surface d'étanchéité de l'organe coulissant de serrage (12) est pourvu d'un tampon d'étanchéité élastique (13).

6. Procédé pour recouvrir de caoutchouc ou de matière plastique, par moulage par injection, un tuyau ou la zone de raccordement à étanchéifier d'un corps composite tubulaire, en particulier pour recouvrir par moulage par injection une jonction de tuyaux souples, par la mise en oeuvre d'un dispositif selon l'une des revendications 1 à 5, caractérisé par les étapes opératoires suivantes:
- l'outil de moulage est ouvert, les organes coulissants de serrage étant alors tous rétractés;
- l'élément à recouvrir par moulage par injection est mis en place;
- l'outil de moulage est fermé;
- tous les organes coulissants de serrage se déplacent dans la position d'étanchéification, une pression étant alors établie;
- du caoutchouc ou de la matière plastique est injecté par des buses dans l'outil de moulage, la pression exercée par les organes coulissants s'opposant alors à la pression d'injection;
- à la fin de la phase de maintien en pression, tous les organes coulissants de serrage s'écartent de l'outil de moulage;
- l'outil de moulage est ensuite ouvert et l'article moulé est retiré.
